(19) **Europäisches Patentamt**
**European Patent Office**
**Office européen des brevets**

(11) **EP 3 961 159 B1**

(12) **EUROPÄISCHE PATENTSCHRIFT**

(45) Veröffentlichungstag und Bekanntmachung des Hinweises auf die Patenterteilung:
**09.08.2023   Patentblatt 2023/32**

(21) Anmeldenummer: **20192999.9**

(22) Anmeldetag: **27.08.2020**

(51) Internationale Patentklassifikation (IPC):
**G01D 5/244** *(2006.01)*        **G01D 5/347** *(2006.01)*

(52) Gemeinsame Patentklassifikation (CPC):
**G01D 5/24438; G01D 5/34715; G01D 5/34746;**
G01D 2205/90

(54) **POSITIONSMESSEINRICHTUNG**

POSITION MEASURING DEVICE

DISPOSITIF DE MESURE DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.03.2022   Patentblatt 2022/09**

(73) Patentinhaber: **Dr. Johannes Heidenhain GmbH 83301 Traunreut (DE)**

(72) Erfinder:
• **Mitterleitner, Josef**
  **83339 Chieming (DE)**
• **Becker, Thomas**
  **83301 Traunreut (DE)**

(56) Entgegenhaltungen:
EP-A1- 2 187 179        WO-A1-2009/103743
DE-A1- 4 306 634        DE-A1-102013 013 718
US-A1- 2016 231 143

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

## GEBIET DER TECHNIK

Die vorliegende Erfindung betrifft eine Positionsmesseinrichtung nach dem Oberbegriff des Anspruchs 1.

## STAND DER TECHNIK

WO 2009/103743 A1 offenbart einen XY-Tisch mit einer Messanordnung zur Positionsbestimmung, mit einem ortsfesten Referenzteil und einem Zwischenteil, das relativ zum Referenzteil in einer ersten Richtung verschiebbar gehalten ist, mit einem Objekt, das relativ zum Zwischenteil in einer zweiten Richtung verschiebbar gehalten ist, wobei ein zu bearbeitendes Teil auf dem Objekt oder dem Referenzteil angeordnet ist, sowie für die erste Richtung mit wenigstens einem 1Dplus-Encoder zum Messen von in-plane-Freiheitsgraden zwischen Referenzteil und Zwischenteil, und für die zweite Richtung mit wenigstens einem 1Dplus-Encoder zum Messen der in-plane-Freiheitsgrade zwischen dem Objekt und dem Zwischenteil, sodass die Lage eines Tool-Center-Points (TCP) am Objekt oder Teil erfassbar ist. Dabei sind die 1Dplus-Encoder konstruktiv so angeordnet, dass deren Projektion in die durch die erste und zweite Richtung aufgespannte Ebene, die den Tool-Center-Point (TCP) enthält, im gesamten Verfahrbereich des XY-Tisches außerhalb des Teils liegt. Dies erlaubt die Einhaltung der Abbe-Bedingung und damit die genaue Erfassung des Tool-Center-Points (TCP) am Objekt mit einfachen 1Dplus-Encodern.

Ein aus WO 2009/103743 A1 bekannter 1Dplus-Encoder (Figur 5) umfasst drei Abtastorte (Abtaststellen) zur Messung der Freiheitsgrade X, Y, RZ. Der 1Dplus-Encoder weist einen Maßstab und einen relativ zum Maßstab beweglich angeordneten Abtastträger auf. Der Abtastträger umfasst drei Abtastköpfe (Abtasteinheiten) zur Realisierung der drei Abtastorte. Aus Messwerten an den einzelnen Abtastorten können mit entsprechenden Transformationsgleichungen Positionswerte in den Freiheitsgraden X, Y, RZ bestimmt werden.

Ein Nachteil des aus WO 2009/103743 A1 bekannten 1Dplus-Encoders ist dessen Empfindlichkeit gegenüber thermischen Ausdehnungen des Maßstabs und/oder des Abtastträgers. Dies folgt daraus, dass eine Realisierung eines thermisch neutralen Punkts bei diesem 1Dplus-Encoder nicht möglich ist. So kommt es aufgrund eines Längenausdehnungskoeffizienten des Abtastträgers, insbesondere auch bei homogenen Temperaturänderungen, zu Relativbewegungen zwischen den einzelnen Abtastorten. Diese Relativbewegungen führen zu Änderungen der Positionsausgaben an den einzelnen Abtastorten und damit, nach Anwendung der entsprechenden Transformationsgleichungen, zu unerwünschten Positionsabweichungen in den Freiheitsgraden X, Y, RZ. Gleichermaßen verursachen thermische Ausdehnungen des Maßstabs Änderungen der Positionsausgaben an den einzelnen Abtastorten, was wiederum zu unerwünschten Positionsabweichungen in den Freiheitsgraden X, Y, RZ führt.

DE 10 2013 013718 A1 offenbart eine Positionsmesseinrichtung nach dem Oberbegriff des Anspruchs 1.

Weitere Positionsmesseinrichtungen mit mehreren Messteilungen und mehreren Abtasteinheiten zum Abtasten der Messteilungen sind in DE 43 06 634 A1 und EP 2 187 179 A1 offenbart.

US 2016/231143 A1 offenbart eine Positionsmesseinrichtung mit einem Maßstab und einem Abtastkopf. Der Maßstab umfasst eine Inkrementalteilung und mindestens eine Referenzmarke.

## ZUSAMMENFASSUNG DER ERFINDUNG

Der vorliegenden Erfindung liegt die Aufgabe zugrunde, eine Positionsmesseinrichtung anzugeben, mit der eine präzise Positionsmessung in einer Hauptmessrichtung und in zwei weiteren Freiheitsgraden ermöglicht wird.

Diese Aufgabe wird erfindungsgemäß durch eine Positionsmesseinrichtung mit den Merkmalen des Anspruchs 1 gelöst.

Die erfindungsgemäß ausgebildete Positionsmesseinrichtung umfasst einen Maßstab, der eine erste Messteilung und eine zweite Messteilung aufweist, eine der ersten Messteilung zugeordnete erste Abtasteinheit zum Abtasten der ersten Messteilung, eine der zweiten Messteilung zugeordnete zweite Abtasteinheit zum Abtasten der zweiten Messteilung und eine der zweiten Messteilung zugeordnete dritte Abtasteinheit zum Abtasten der zweiten Messteilung. Die erste Messteilung umfasst eine Folge von Teilungsstrukturen, sich jeweils parallel zu einer ersten Richtung erstrecken. Die zweite Messteilung umfasst eine Folge von Teilungsstrukturen, die sich jeweils parallel zu einer zweiten Richtung erstrecken. Die erste und zweite Richtung verlaufen jeweils in Bezug auf eine Längsachse des Maßstabs unter einem von 0° verschiedenen Winkel. Die Positionsmesseinrichtung weist eine der ersten oder zweiten Messteilung zugeordnete vierte Abtasteinheit zum Abtasten der ersten bzw. zweiten Messteilung auf. Wenn die vierte Abtasteinheit der ersten Messteilung zur Abtastung der ersten Messteilung zugeordnet ist, bilden eine erste Verbindungsgerade, die durch Abtastorte der ersten und vierten Abtasteinheit verläuft, und eine zweite Verbindungsgerade, die durch Abtastorte der zweiten und dritten Abtasteinheit verläuft, einen vorbestimmten Winkel zueinander. Der vorbestimmte Winkel ist ungleich einer Summe des Winkels der ersten Richtung und des Winkels der zweiten Richtung. Wenn die vierte Abtasteinheit der zweiten Messteilung zur Abtastung der zweiten Messteilung zugeordnet ist, liegen die Abtastorte der zweiten bis vierten Abtasteinheit nicht auf einer gemeinsamen Verbindungsgeraden und ist ein senkrechter Abstand des Abtastorts der vierten Abtasteinheit von einer Verbindungsgeraden, die durch Abtastorte der zweiten und dritten Abtasteinheit verläuft, größer als 1mm.

Es ist vorteilhaft, wenn die Positionsmesseinrichtung einen relativ zum Maßstab beweglich angeordneten Abtastträger zum Tragen der ersten bis vierten Abtasteinheit aufweist.

Ferner ist es vorteilhaft, wenn die erste und zweite Messteilung und die erste bis vierte Abtasteinheit derart angeordnet und ausgebildet sind, dass eine Lage des Abtastträgers relativ zum Maßstab in einer ersten Messrichtung (Hauptmessrichtung) und in zwei weiteren Freiheitsgraden bestimmbar ist.

Die Positionsmesseinrichtung dient bevorzugt zur Positionsmessung in in-plane-Freiheitsgraden (d. h. Freiheitsgrade X, Y, RZ).

Vorzugsweise sind die Teilungsstrukturen der ersten Messteilung und die Teilungsstrukturen der zweiten Messteilung jeweils entlang einer ersten Messrichtung (Hauptmessrichtung) periodisch angeordnet.

Die erste Messteilung und die zweite Messteilung sind insbesondere Inkrementalteilungen.

Die Teilungsstrukturen der ersten Messteilung und die Teilungsstrukturen der zweiten Messteilung umfassen insbesondere jeweils Teilungsstriche. Die Teilungsstriche können entlang ihres Verlaufs gleiche Breiten aufweisen und durchgängig ausgebildet sein. Alternativ können die Teilungsstriche auch entlang ihres Verlaufs unterbrochen oder breitenmoduliert sein.

Anstelle von Inkrementalteilungen können die erste und zweite Messteilung jeweils auch absolute Teilungen sein, beispielsweise ausgebildet als Pseudo-Random-Code.

Durch die Erfindung wird unter Nutzung eines zusätzlichen (vierten) Abtastorts eine thermisch invariante Positionsmessung in den Freiheitsgraden X, Y, RZ erreicht. Hierzu sind die Teilungsstrukturen der ersten Messteilung und die Teilungsstrukturen der zweiten Messteilung jeweils gegenüber der Hauptmessrichtung geneigt. Dies hat den Vorteil, dass bei einer Relativbewegung zwischen dem Maßstab und dem Abtastträger in Hauptmessrichtung stets Positionsänderungen an allen vier Abtastorten auftreten. Dadurch wird es einerseits ermöglicht, für alle Abtastorte (d. h. die Abtastorte der ersten bis vierten Abtasteinheit) eine Signalkompensation zur Steigerung der Genauigkeit zu realisieren. Des Weiteren wird es dadurch andererseits auch ermöglicht, für beide Messteilungen (d. h. die erste und zweite Messteilung) Referenzmarken anzuordnen und zu erfassen, selbst wenn keine Querbewegung, d. h. eine Relativbewegung in einer zur Hauptmessrichtung senkrecht verlaufenden weiteren (zweiten) Messrichtung, auftritt. Somit kann für alle drei in-plane-Freiheitsgrade X, Y, RZ ein Absolutbezug hergestellt werden.

Die Erfindung ermöglicht somit die Realisierung einer thermisch invarianten Positionsmessung in den Freiheitsgraden X, Y, RZ sowie gleichzeitig eine Signalkompensation und das Vorsehen von Referenzmarken für beide Messteilungen zur Herstellung eines Absolutbezugs.

Vorteilhafte Ausbildungen der Erfindung entnimmt man den abhängigen Ansprüchen.

Weitere Einzelheiten und Vorteile der vorliegenden Erfindung werden anhand der nachfolgenden Beschreibung von möglichen Ausgestaltungen der Erfindung in Verbindung mit den Figuren erläutert.

## KURZE BESCHREIBUNG DER ZEICHNUNGEN

Es zeigen

Figur 1    eine im Stand der Technik bekannte Positionsmesseinrichtung;

Figur 2    eine Positionsmesseinrichtung gemäß einem ersten Ausführungsbeispiel;

Figur 3    eine nicht erfindungsgemäß ausgestaltete Positionsmesseinrichtung zur Veranschaulichung eines Gegenbeispiels; und

Figur 4    eine Positionsmesseinrichtung gemäß einem zweiten Ausführungsbeispiel.

## BESCHREIBUNG DER AUSFÜHRUNGSFORMEN

Gleiche Elemente oder funktionell gleiche Elemente sind in den Figuren mit gleichen Bezugszeichen versehen.

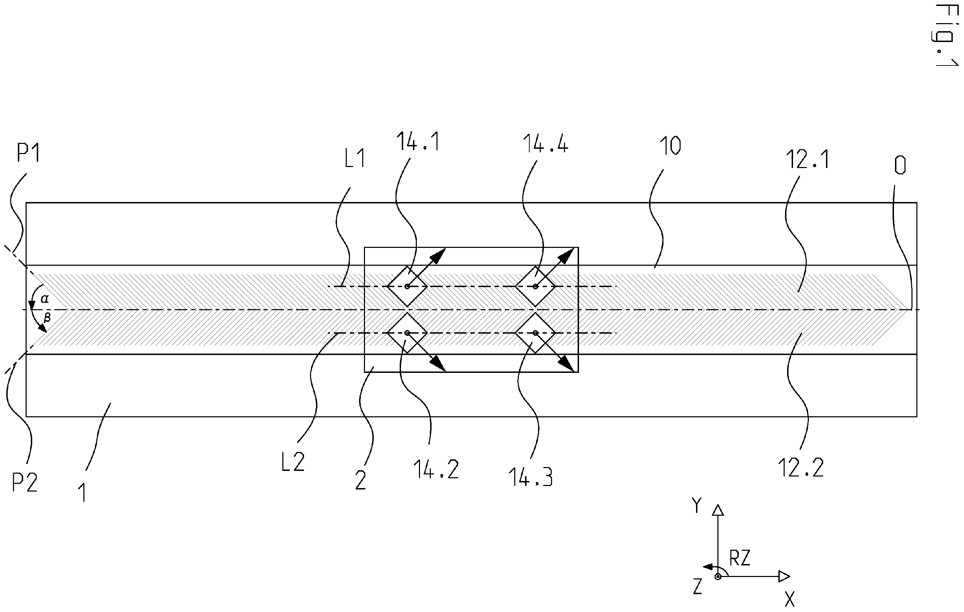

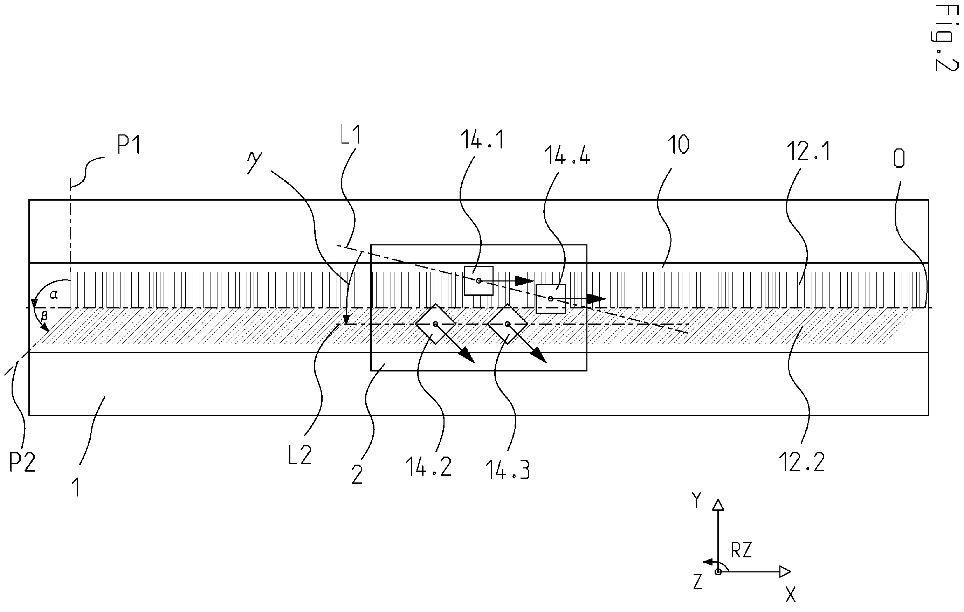

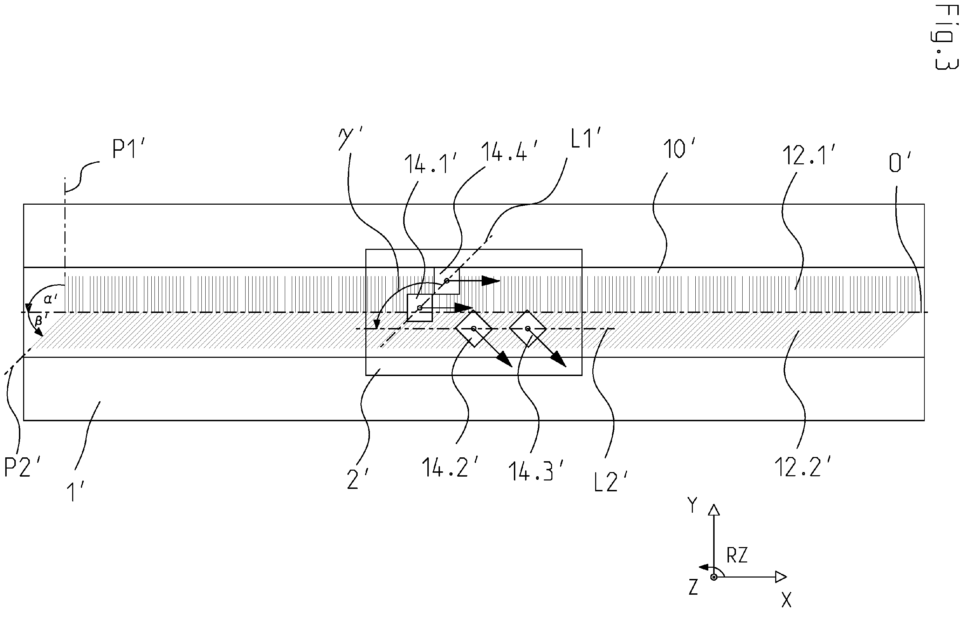

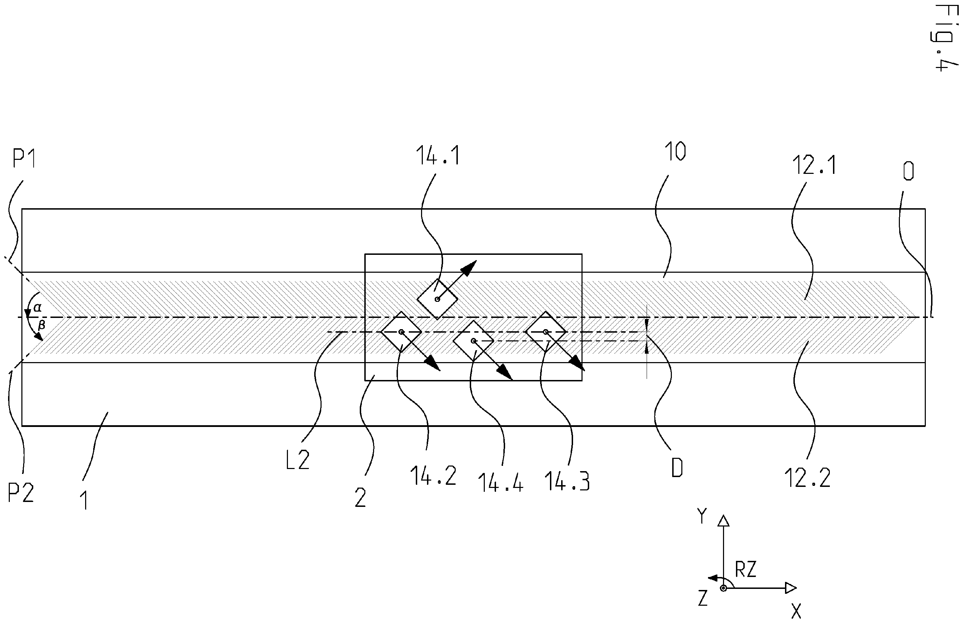

Figur 1 zeigt eine im Stand der Technik bekannte Positionsmesseinrichtung. Ein erstes und zweites Ausführungsbeispiel werden nachfolgend anhand der Figuren 2 und 4 erläutert. Ein Gegenbeispiel (Negativbeispiel) wird anhand von Figur 3 erläutert. Die Positionsmesseinrichtung gemäß dem ersten und zweiten Ausführungsbeispiel dient zur Messung der Relativlage zweier zueinander beweglicher Objekte in einer ersten Messrichtung X und in zwei weiteren Freiheitsgraden Y, RZ. Der Freiheitsgrad X ist ein linearer Freiheitsgrad und entspricht der ersten Messrichtung X. Der Freiheitsgrad Y ist ein linearer Freiheitsgrad und entspricht einer zur ersten Messrichtung X senkrecht verlaufenden zweiten Messrichtung Y. Der Freiheitsgrad RZ ist ein rotatorischer Freiheitsgrad um die lineare Achse Z. Die erste Messrichtung X ist die Hauptmessrichtung, und die beiden weiteren Freiheitsgrade Y, RZ sind mit der Positionsmesseinrichtung gemäß dem ersten und zweiten Ausführungsbeispiel messbare Abweichungen an der jeweiligen Position X.

Die Positionsmesseinrichtung nach Figur 1 umfasst einen Maßstab 10, der auf einem Grundkörper 1 (z. B. ortsfestes Referenzteil) angeordnet ist. Ferner umfasst die Positionsmesseinrichtung nach Figur 1 einen relativ zum Maßstab 10 beweglich angeordneten Abtastträger 2 zum Tragen einer ersten bis vierten Abtasteinheit 14.1 bis 14.4. Die erste bis vierte Abtasteinheit 14.1 bis 14.4 sind auf einer Unterseite des Abtastträgers 2 angeordnet. Der Abtastträger 2 ist zumindest in den Freiheitsgraden X, Y, RZ beweglich und an einem zu messenden Objekt befestigbar.

Wie in Figur 1 gezeigt, umfasst der Maßstab 10 eine erste Messteilung 12.1 und eine zweite Messteilung 12.2. Die erste Abtasteinheit 14.1 ist der ersten Messteilung 12.1 zugeordnet und dient zum Abtasten der ersten Messteilung 12.1. Die zweite Abtasteinheit 14.2 ist der zweiten Messteilung 12.2 zugeordnet und dient zum Abtasten der zweiten Messteilung 12.2. Die dritte Abtasteinheit 14.3 ist der zweiten Messteilung 12.2 zugeordnet und dient zum Abtasten der zweiten Messteilung 12.2. Ferner ist in Figur 1 gezeigt, dass die erste Messteilung 12.1 und die zweite Messteilung 12.2 jeweils eine Folge von Teilungsstrukturen umfassen. Die Teilungsstrukturen der ersten Messteilung 12.1 erstrecken sich jeweils parallel zu einer ersten Richtung P1. Die Teilungsstrukturen der zweiten Messteilung 12.2 erstrecken sich jeweils parallel zu einer zweiten Richtung P2. Die erste und zweite Richtung P1, P2 verlaufen jeweils in Bezug auf eine Längsachse O des Maßstabs 10 unter einem von 0° verschiedenen Winkel $\alpha$, $\beta$.

Bei der Positionsmesseinrichtung nach Figur 1 ist die vierte Abtasteinheit 14.4 der ersten Messteilung 12.1 zugeordnet und dient zum Abtasten der ersten Messteilung 12.1. Ferner sind bei der Positionsmesseinrichtung nach Figur 1 eine erste Verbindungsgerade L1, die durch Abtastorte der ersten und vierten Abtasteinheit 14.1, 14.4 verläuft, und eine zweite Verbindungsgerade L2, die durch Abtastorte der zweiten und dritten Abtasteinheit 14.2, 14.3 verläuft, parallel zueinander.

Bei der Positionsmesseinrichtung nach Figur 1 betragen der Winkel $\alpha$ der ersten Richtung P1 und der Winkel $\beta$ der zweiten Richtung P2 jeweils 45°. Die erste Verbindungsgerade L1 und die zweite Verbindungsgerade L2 sind zum einen parallel zueinander und zum anderen jeweils parallel zur Längsachse O des Maßstabs 10.

Die Positionsmesseinrichtung gemäß dem ersten Ausführungsbeispiel unterscheidet sich von der Positionsmesseinrichtung nach Figur 1 dadurch, dass die erste Verbindungsgerade L1, die durch Abtastorte der ersten und vierten Abtasteinheit 14.1, 14.4 verläuft, und die zweite Verbindungsgerade L2, die durch Abtastorte der zweiten und dritten Abtasteinheit 14.2, 14.3 verläuft, einen vorbestimmten Winkel $\gamma$ zueinander bilden (vgl. Figur 2). Dieser vorbestimmte Winkel $\gamma$ ist ungleich einer Summe des Winkels $\alpha$ der ersten Richtung P1 und des Winkels $\beta$ der zweiten Richtung P2.

Bei der Positionsmesseinrichtung gemäß dem ersten Ausführungsbeispiel betragen der Winkel $\alpha$ der ersten Richtung P1 90° und der Winkel $\beta$ der zweiten Richtung P2 45°. Der vorbestimmte Winkel $\gamma$ beträgt 15°. Somit ist die folgende Bedingung erfüllt:

$$\gamma \neq \alpha + \beta \qquad \text{(Gl. 1)}$$

Wie in Figur 2 gezeigt, ist nur die zweite Verbindungsgerade L2 parallel zur Längsachse O des Maßstabs 10.

Die Positionsmesseinrichtung gemäß dem zweiten Ausführungsbeispiel unterscheidet sich von der Positionsmesseinrichtung nach Figur 1 oder gemäß dem ersten Ausführungsbeispiel dadurch, dass die vierte Abtasteinheit 14.4 der zweiten Messteilung 12.2 zugeordnet ist und zum Abtasten der zweiten Messteilung 12.2 dient (vgl. Figur 4). Insbesondere liegen bei der Positionsmesseinrichtung gemäß dem zweiten Ausführungsbeispiel die Abtastorte der zweiten bis vierten Abtasteinheit 14.2 bis 14.4 nicht auf einer gemeinsamen Verbindungsgeraden.

Bei der Positionsmesseinrichtung gemäß dem zweiten Ausführungsbeispiel betragen der Winkel $\alpha$ der ersten Richtung P1 und der Winkel $\beta$ der zweiten Richtung P2 jeweils 45°. Wie in Figur 4 gezeigt, verläuft eine Verbindungsgerade L2 durch Abtastorte der zweiten und dritten Abtasteinheit 14.2, 14.3. Diese Verbindungsgerade L2 ist parallel zur Längsachse O des Maßstabs 10.

Bei der Positionsmesseinrichtung gemäß dem zweiten Ausführungsbeispiel ist ein senkrechter Abstand D des Abtastorts der vierten Abtasteinheit 14.4 von der Verbindungsgeraden L2 größer als 1mm.

Die Positionsmesseinrichtung nach Figur 3 (Negativbeispiel) umfasst im Wesentlichen die gleichen Elemente wie die Positionsmesseinrichtung gemäß dem ersten und zweiten Ausführungsbeispiel. Diese Elemente sind in Figur 3 mit den gleichen Bezugszeichen gestrichen versehen. Die Positionsmesseinrichtung nach Figur 3 unterscheidet sich von der Positionsmesseinrichtung gemäß dem ersten Ausführungsbeispiel dadurch, dass die erste Verbindungsgerade L1', die durch Abtastorte der ersten und vierten Abtasteinheit 14.1', 14.4' verläuft, und die zweite Verbindungsgerade L2', die durch Abtastorte der zweiten und dritten Abtasteinheit 14.2', 14.3' verläuft, den vorbestimmten Winkel $\gamma'$ zueinander bilden. Dieser vorbestimmte Winkel $\gamma'$ ist gleich einer Summe des Winkels $\alpha'$ der ersten Richtung P1' und des Winkels $\beta'$ der zweiten Richtung P2'. Bei der Positionsmesseinrichtung nach Figur 3 ist somit die vorgenannte Bedingung nach Gleichung 1 nicht erfüllt.

Insbesondere betragen bei der Positionsmesseinrichtung nach Figur 3 der Winkel $\alpha'$ der ersten Richtung P1' 90° und der Winkel $\beta'$ der zweiten Richtung P2 45°. Der vorbestimmte Winkel $\gamma'$ beträgt 135°. Es gilt also $\gamma' = \alpha' + \beta'$.

Bei allen Ausführungsbeispielen liegen der Winkel $\alpha$ der ersten Richtung P1 und der Winkel $\beta$ der zweiten Richtung P2 jeweils in einem Bereich von 15° bis 165°, vorzugsweise im Bereich von 30° bis 150°. Der Winkel $\alpha$ der ersten Richtung P1 und der Winkel $\beta$ der zweiten Richtung P2 sind beispielsweise gleich groß (vgl. das zweite Ausführungsbeispiel).

In vorteilhafter Weise weicht der vorbestimmte Winkel $\gamma$ um mehr als $\pm 5°$, $\pm 10°$ oder $\pm 15°$ von der Summe des Winkels $\alpha$ der ersten Richtung P1 und des Winkels $\beta$ der zweiten Richtung P2 ab.

Die Winkel $\alpha$ und $\beta$ sind definiert als Winkel zwischen der Längsachse O des Maßstabs 10 und der ersten bzw. zweiten Richtung P1, P2 (siehe Figur 1, 2 und 4). Der Winkel $\gamma$ ist definiert als ein Winkel zwischen der ersten und zweiten Verbindungsgeraden L1, L2 (siehe Figur 2). Alle Winkel $\alpha$, $\beta$ und $\gamma$ sind im positiven Drehsinn (Gegenuhrzeigersinn) anzutragen.

Der Abtastort ist der Bezugspunkt der Positionsmessung der jeweiligen ersten bis vierten Abtasteinheit 14.1 bis 14.4. In den Figuren 1, 2 und 4 ist der Abtastort innerhalb jeder der ersten bis vierten Abtasteinheit 14.1 bis 14.4 mit einem kleinen Kreis symbolisch dargestellt.

In den Figuren 1, 2 und 4 ist der sogenannte Empfindlichkeitsvektor der ersten bis vierten Abtasteinheit 14.1 bis 14.4 mit einem Pfeil an der jeweiligen Abtasteinheit 14.1 bis 14.4 dargestellt. Der Empfindlichkeitsvektor gibt dabei die Bewegungsrichtung an, in der sich ein davon abgeleitetes Messsignal pro zurückgelegter Längeneinheit am schnellsten verändert.

Die Erfindung ermöglicht die Erweiterung eines bekannten 1Dplus-Encoders mit zwei jeweils geneigten Messteilungen und drei Abtastorten zur Messung der in-plane-Freiheitsgrade X, Y, RZ um einen zusätzlichen (vierten) Abtastort. Dabei sollte die Positionierung des vierten Abtastorts (d. h. Abtastort der vierten Abtasteinheit 14.4) so gewählt werden, dass als zusätzlicher (vierter) Freiheitsgrad die thermische Ausdehnung des Abtastträgers 2 und/oder des Maßstabs 10 linear unabhängig von den drei Freiheitsgraden X, Y, RZ ermittelt werden kann. Dadurch wird erreicht, dass es zu keinem Übersprechen dieser vier Freiheitsgrade kommt. Dies hat wiederum den Vorteil, dass sich eine thermische Ausdehnung des Abtastträgers 2 und/oder des Maßstabs 10 nicht auf die Positionsbestimmung in den Freiheitsgraden X, Y, RZ auswirkt.

Durch die Erfindung wird insbesondere die Anforderung einer linear unabhängigen Messung der Freiheitsgrade X, Y, RZ sowie der thermischen Ausdehnung des Abtastträgers 2 und/oder des Maßstabs 10 erfüllt.

Durch die Erfindung können Fehler bzw. Abweichungen in den Freiheitsgraden X, Y, RZ, die durch eine homogene Temperaturänderung zwischen den einzelnen Abtastorten bedingt sind, weitestgehend unterdrückt werden. Lediglich der inhomogene Anteil einer Temperaturänderung zwischen den einzelnen Abtastorten könnte zu temperaturbedingten Restfehlern bei der Positionsbestimmung in den Freiheitsgraden X, Y, RZ führen. Solch ein inhomogener Anteil der Temperaturänderung ist jedoch in vielen Anwendungsfällen gering.

Die Erfindung ermöglicht eine besonders hochauflösende Positionsmessung, wenn die erste und zweite Messteilung 12.1, 12.2 jeweils optisch abtastbar ausgebildet sind. Die erste und zweite Messteilung 12.1, 12.2 können alternativ auch magnetisch, induktiv oder kapazitiv abtastbar ausgebildet sein.

Im Übrigen kann die vierte Abtasteinheit 14.4 zur Bestimmung bzw. Kompensation einer ortsaufgelösten thermischen Ausdehnung des Maßstabs 10 genutzt werden.

**Patentansprüche**

1. Positionsmesseinrichtung, mit

  einem Maßstab (10), der eine erste Messteilung (12.1) und eine zweite Messteilung (12.2) aufweist,
  einer der ersten Messteilung (12.1) zugeordneten ersten Abtasteinheit (14.1) zum Abtasten der ersten Messteilung (12.1),
  einer der zweiten Messteilung (12.2) zugeordneten zweiten Abtasteinheit (14.2) zum Abtasten der zweiten Messteilung (12.2) und einer der zweiten Messteilung (12.2) zugeordneten dritten Abtasteinheit (14.3) zum Abtasten der zweiten Messteilung (12.2),
  wobei die erste Messteilung (12.1) eine Folge von Teilungsstrukturen, die sich jeweils parallel zu einer ersten Richtung (P1) erstrecken, umfasst, wobei die zweite Messteilung (12.2) eine Folge von Teilungsstrukturen, die sich jeweils parallel zu einer zweiten Richtung (P2) erstrecken, umfasst,
  wobei die erste und zweite Richtung (P1, P2) jeweils in Bezug auf eine Längsachse (O) des Maßstabs (10) unter einem von 0° verschiedenen Winkel ($\alpha$,$\beta$) verlaufen,
  wobei die Positionsmesseinrichtung die erste, zweite und dritte Abtasteinheit (14.1 - 14.3) aufweist,
  wobei die Positionsmesseinrichtung eine der ersten oder zweiten Messteilung (12.1, 12.2) zugeordnete vierte Abtasteinheit (14.4) zum Abtasten der ersten beziehungsweise zweiten Messteilung (12.1, 12.2) aufweist,
  **dadurch gekennzeichnet, dass**
  wenn die vierte Abtasteinheit (14.4) der ersten Messteilung (12.1) zur Abtastung der ersten Messteilung (12.1) zugeordnet ist, eine erste Verbindungsgerade (L1), die durch Abtastorte der ersten und vierten Abtasteinheit (14.1, 14.4) verläuft, und eine zweite Verbindungsgerade (L2), die durch Abtastorte der zweiten und dritten Abtasteinheit (14.2, 14.3) verläuft, einen vorbestimmten Winkel ($\gamma$) zueinander bilden, wobei der vorbestimmte Winkel ($\gamma$) ungleich einer Summe des Winkels ($\alpha$) der ersten Richtung (P1) und des Winkels ($\beta$) der zweiten Richtung (P2) ist, und
  wenn die vierte Abtasteinheit (14.4) der zweiten Messteilung (12.2) zur Abtastung der zweiten Messteilung (12.2) zugeordnet ist, die Abtastorte der zweiten bis vierten Abtasteinheit (14.2 - 14.4) nicht auf einer gemeinsamen Verbindungsgeraden liegen und ein senkrechter Abstand (D) des Abtastorts der vierten Abtasteinheit (14.4) von einer Verbindungsgeraden (L2), die durch Abtastorte der zweiten und dritten Abtasteinheit (14.2, 14.3) verläuft, größer als 1mm ist.

2. Positionsmesseinrichtung nach Anspruch 1, wobei die Positionsmesseinrichtung einen relativ zum Maßstab (10) beweglich angeordneten Abtastträger (2) zum Tragen der ersten bis vierten Abtasteinheit (14.1 - 14.4) aufweist.

3. Positionsmesseinrichtung nach Anspruch 2, wobei die erste und zweite Messteilung (12.1, 12.2) und die erste bis vierte Abtasteinheit (14.1 - 14.4) derart angeordnet und ausgebildet sind, dass eine Lage des Abtastträgers (2) relativ zum Maßstab (10) in einer ersten Messrichtung (X) und in zwei weiteren Freiheitsgraden (Y, RZ) bestimmbar ist.

4. Positionsmesseinrichtung nach einem der vorhergehenden Ansprüche, wobei der Winkel ($\alpha$) der ersten Richtung (P1) und der Winkel ($\beta$) der zweiten Richtung (P2) jeweils in einem Bereich von 15° bis 165°, vorzugsweise im Bereich von 30° bis 150°, liegen.

5. Positionsmesseinrichtung nach einem der vorhergehenden Ansprüche, wobei der Winkel ($\alpha$) der ersten Richtung (P1) und der Winkel ($\beta$) der zweiten Richtung (P2) gleich groß sind.

6. Positionsmesseinrichtung nach Anspruch 5, wobei der Winkel ($\alpha$) der ersten Richtung (P1) und der Winkel ($\beta$) der zweiten Richtung (P2) jeweils 45° betragen.

7. Positionsmesseinrichtung nach einem der Ansprüche 1 bis 4, wobei der Winkel ($\alpha$) der ersten Richtung (P1) 90° und der Winkel ($\beta$) der zweiten Richtung (P2) 45° betragen.

8. Positionsmesseinrichtung nach einem der vorhergehenden Ansprüche, wobei die erste Verbindungsgerade (L1) oder die zweite Verbindungsgerade (L2) parallel zur Längsachse (O) des Maßstabs (10) ist, wenn die vierte Abtasteinheit (14.4) der ersten Messteilung (12.1) zur Abtastung der ersten Messteilung (12.1) zugeordnet ist.

9. Positionsmesseinrichtung nach einem der vorhergehenden Ansprüche, wobei der vorbestimmte Winkel ($\gamma$) um mehr als $\pm 5°$, $\pm 10°$ oder $\pm 15°$ von der Summe des Winkels ($\alpha$) der ersten Richtung (P1) und

des Winkels ($\beta$) der zweiten Richtung (P2) abweicht, wenn die vierte Abtasteinheit (14.4) der ersten Messteilung (12.1) zur Abtastung der ersten Messteilung (12.1) zugeordnet ist.

10. Positionsmesseinrichtung nach einem der vorhergehenden Ansprüche, wobei die Teilungsstrukturen der ersten Messteilung (12.1) und die Teilungsstrukturen der zweiten Messteilung (12.2) jeweils entlang einer ersten Messrichtung (X) periodisch angeordnet sind.

11. Positionsmesseinrichtung nach einem der vorhergehenden Ansprüche, wobei die erste und zweite Messteilung (12.1, 12.2) jeweils absolute Teilungen sind.

12. Positionsmesseinrichtung nach einem der vorhergehenden Ansprüche, wobei die erste und zweite Messteilung (12.1, 12.2) jeweils optisch abtastbar ausgebildet sind.

**Claims**

1. Position measuring device comprising

a scale (10) having a first measurement graduation (12.1) and a second measurement graduation (12.2), a first scanning unit (14.1) assigned to the first measurement graduation (12.1) for scanning the first measurement graduation (12.1),
a second scanning unit (14.2) assigned to the second measurement graduation (12.2) for scanning the second measurement graduation (12.2), and a third scanning unit (14.3) assigned to the second measurement graduation (12.2) for scanning the second measurement graduation (12.2),
the first measurement graduation (12.1) comprising a sequence of graduation structures which each extend parallel to a first direction (P1),
the second measurement graduation (12.2) comprising a sequence of graduation structures which each extend parallel to a second direction (P2),
the first and second directions (P1, P2) each running at an angle ($\alpha$, $\beta$) different from 0° with respect to a longitudinal axis (O) of the scale (10),
the position measuring device having the first, second and third scanning units (14.1 - 14.3),
the position measuring device having a fourth scanning unit (14.4) assigned to the first or second measurement graduation (12.1, 12.2) for scanning the first or second measurement graduation (12.1, 12.2), respectively,

**characterized in that**,

if the fourth scanning unit (14.4) is assigned to the first measurement graduation (12.1) for scanning the first measurement graduation (12.1), a first connecting straight line (L1), running through scanning locations of the first and fourth scanning units (14.1, 14.4) and a second connecting straight line (L2) running through scanning locations of the second and third scanning units (14.2, 14.3) form a predetermined angle ($\gamma$) with respect to one another, the predetermined angle ($\gamma$) being not equal to a sum of the angle ($\alpha$) of the first direction (P1) and the angle ($\beta$) of the second direction (P2), and, if the fourth scanning unit (14.4) is assigned to the second measurement graduation (12.2) for scanning the second measurement graduation (12.2), the scanning locations of the second to fourth scanning units (14.2 - 14.4) do not lie on a common connecting straight line and a perpendicular distance (D) between the scanning location of the fourth scanning unit (14.4) and a connecting straight line (L2) running through scanning locations of the second and third scanning units (14.2, 14.3) is greater than 1 mm.

2. Position measuring device according to Claim 1, wherein the position measuring device has a scanning carrier (2) for carrying the first to fourth scanning units (14.1 - 14.4), said scanning carrier being arranged movably relative to the scale (10).

3. Position measuring device according to Claim 2, wherein the first and second measurement graduations (12.1, 12.2) and the first to fourth scanning units (14.1 - 14.4) are arranged and configured in such a way that a position of the scanning carrier (2) relative to the scale (10) is determinable in a first measurement direction (X) and in two further degrees of freedom (Y, RZ).

4. Position measuring device according to any of the preceding claims, wherein the angle ($\alpha$) of the first direction (P1) and the angle ($\beta$) of the second direction (P2) are each in a range of 15° to 165°, preferably in the range of 30° to 150°.

5. Position measuring device according to any of the preceding claims, wherein the angle ($\alpha$) of the first direction (P1) and the angle ($\beta$) of the second direction (P2) are equal in magnitude.

6. Position measuring device according to Claim 5, wherein the angle ($\alpha$) of the first direction (P1) and the angle ($\beta$) of the second direction (P2) are each 45°.

7. Position measuring device according to any of Claims 1 to 4, wherein the angle ($\alpha$) of the first direction (P1) is 90° and the angle ($\beta$) of the second direction (P2) is 45°.

8. Position measuring device according to any of the preceding claims, wherein the first connecting straight line (L1) or the second connecting straight line (L2) is parallel to the longitudinal axis (O) of the scale (10) if the fourth scanning unit (14.4) is assigned to the first measurement graduation (12.1) for scanning the first measurement graduation (12.1).

9. Position measuring device according to any of the preceding claims, wherein the predetermined angle ($\gamma$) deviates by more than ± 5°, ± 10° or ± 15° from the sum of the angle ($\alpha$) of the first direction (P1) and the angle ($\beta$) of the second direction (P2) if the fourth scanning unit (14.4) is assigned to the first measurement graduation (12.1) for scanning the first measurement graduation (12.1).

10. Position measuring device according to any of the preceding claims, wherein the graduation structures of the first measurement graduation (12.1) and the graduation structures of the second measurement graduation (12.2) are in each case arranged periodically along a first measurement direction (X) .

11. Position measuring device according to any of the preceding claims, wherein the first and second measurement graduations (12.1, 12.2) are each absolute graduations.

12. Position measuring device according to any of the preceding claims, wherein the first and second measurement graduations (12.1, 12.2) are each configured as optically scannable.

**Revendications**

1. Dispositif de mesure de position, comportant

une règle graduée (10) qui présente une première graduation de mesure (12.1) et une deuxième graduation de mesure (12.2), une première unité de balayage (14.1) associée à la première graduation de mesure (12.1) pour balayer la première graduation de mesure (12.1), une deuxième unité de balayage (14.2) associée à la deuxième graduation de mesure (12.2) pour balayer la deuxième graduation de mesure (12.2) et une troisième unité de balayage (14.3) associée à la deuxième graduation de mesure (12.2) pour balayer la deuxième graduation de mesure (12.2),

dans lequel la première graduation de mesure (12.1) comprend une succession de structures de graduation qui s'étendent chacune parallèlement à une première direction (P1),

dans lequel la deuxième graduation de mesure (12.2) comprend une succession de structures de graduation qui s'étendent chacune parallèlement à une deuxième direction (P2),

dans lequel les première et deuxième directions (P1, P2) s'étendent chacune par rapport à un axe longitudinal (O) de la règle graduée (10) selon un angle (α, β) différent de 0°,

dans lequel le dispositif de mesure de position comporte les première, deuxième et troisième unités de balayage (14.1 - 14.3),

dans lequel le dispositif de mesure de position comporte une quatrième unité de balayage (14.4) associée à la première ou à la deuxième graduation de mesure (12.1, 12.2) pour balayer la première ou la deuxième graduation de mesure (12.1, 12.2),

**caractérisé en ce que**,

lorsque la quatrième unité de balayage (14.4) est associée à la première graduation de mesure (12.1) pour le balayage de la première graduation de mesure (12.1), une première droite de liaison (L1) qui passe par des emplacements de balayage des première et quatrième unités de balayage (14.1, 14.4) et une deuxième droite de liaison (L2) qui passe par des emplacements de balayage des deuxième et troisième unités de balayage (14.2, 14.3), forment un angle prédéterminé (γ) l'une par rapport à l'autre, l'angle prédéterminé (γ) n'étant pas égal à une somme de l'angle (α) de la première direction (P1) et de l'angle (β) de la deuxième direction (P2), et lorsque la quatrième unité de balayage (14.4) est associée à la deuxième graduation de mesure (12.2) pour le balayage de la deuxième graduation de mesure (12.2), les emplacements de balayage des deuxième à quatrième unités de balayage (14.2 - 14.4) ne se situent pas sur une droite de liaison commune et une distance perpendiculaire (D) entre l'emplacement de balayage de la quatrième unité de balayage (14.4) et une droite de liaison (L2) qui passe par des emplacements de balayage des deuxième et troisième unités de balayage (14.2, 14.3) est supérieure à 1 mm.

2. Dispositif de mesure de position selon la revendication 1, dans lequel le dispositif de mesure de position comporte un support de balayage (2) disposé de manière mobile par rapport à la règle graduée (10) pour porter les première à quatrième unités de balayage (14.1 - 14.4).

3. Dispositif de mesure de position selon la revendication 2, dans lequel les première et deuxième graduations de mesure (12.1, 12.2) et les première à quatrième unités de balayage (14.1 - 14.4) sont disposées et conçues de telle sorte qu'une position du support de balayage (2) par rapport à la règle graduée (10) puisse être déterminée dans une première direction de mesure (X) et selon deux autres degrés de liberté (Y, RZ).

4. Dispositif de mesure de position selon l'une quelconque des revendications précédentes, dans lequel l'angle (α) de la première direction (P1) et l'angle (β) de la deuxième direction (P2) se situent respectivement dans une plage de 15° à 165°, de préférence dans une plage de 30° à 150°.

5. Dispositif de mesure de position selon l'une quelconque des revendications précédentes, dans lequel l'angle (α) de la première direction (P1) et l'angle (β) de la deuxième direction (P2) sont égaux.

6. Dispositif de mesure de position selon la revendication 5, dans lequel l'angle (α) de la première direction (P1) et l'angle (β) de la deuxième direction (P2) sont respectivement de 45°.

7. Dispositif de mesure de position selon l'une quelconque des revendications 1 à 4, dans lequel l'angle (α) de la première direction (P1) est de 90° et l'angle (β) de la deuxième direction (P2) est de 45°.

8. Dispositif de mesure de position selon l'une quelconque des revendications précédentes, dans lequel la première droite de liaison (L1) ou la deuxième droite de liaison (L2) est parallèle à l'axe longitudinal (O) de la règle graduée (10) lorsque la quatrième unité de balayage (14.4) est associée à la première graduation de mesure (12.1) pour le balayage de la première graduation de mesure (12.1).

9. Dispositif de mesure de position selon l'une quelconque des revendications précédentes, dans lequel l'angle prédéterminé (γ) s'écarte de plus de ±5°, ±10° ou ±15° de la somme de l'angle (α) de la première direction (P1) et de l'angle (β) de la deuxième direction (P2), lorsque la quatrième unité de balayage (14.4) est associée à la première graduation de mesure (12.1) pour le balayage de la première graduation de mesure (12.1).

10. Dispositif de mesure de position selon l'une quelconque des revendications précédentes, dans lequel les structures de graduation de la première graduation de mesure (12.1) et les structures de graduation de la deuxième graduation de mesure (12.2) sont respectivement disposées de manière périodique le long d'une première direction de mesure (X).

**11.** Dispositif de mesure de position selon l'une quelconque des revendications précédentes, dans lequel les première et deuxième graduations de mesure (12.1, 12.2) sont respectivement des graduations absolues.

**12.** Dispositif de mesure de position selon l'une quelconque des revendications précédentes, dans lequel les première et deuxième graduations de mesure (12.1, 12.2) sont respectivement conçues de manière à pouvoir être détectées optiquement.

Fig.1

EP 3 961 159 B1

Fig.2

Fig.3

EP 3 961 159 B1

Fig.4

EP 3 961 159 B1

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009103743 A1
- DE 102013013718 A1
- DE 4306634 A1
- EP 2187179 A1
- US 2016231143 A1